# FASCICULE DE BREVET EUROPEEN

(11) **EP 3 410 847 B1**
(45) Date de publication et mention de la délivrance du brevet: **11.03.2020**
(21) Numéro de dépôt: 17701893.4
(22) Date de dépôt: 31.01.2017
(51) Int. Cl.: A01K 61/00, A01K 63/00, A01K 61/17

(54) **SYSTÈME DE REPRODUCTION DE POISSONS-ZÈBRE**
SYSTEM ZUR ZUCHT VON ZEBRAFISCHEN
SYSTEM FOR BREEDING ZEBRA FISH

(30) Priorité: 01.02.2016 FR 1650790
(43) Date de publication de la demande: 12.12.2018
(73) Titulaire: Centre National de la Recherche Scientifique (CNRS), 75016 Paris (FR); Institut National De La Recherche Agronomique, 75007 Paris (FR)
(72) Inventeur: DIJOUX, Emmanuel, 97419 La Possession La Réunion (FR); LEGENDRE, Laurent, 91140 Villebon-sur-Yvette (FR); SOHM, Frédéric, 91190 Gif-sur-Yvette (FR)
(74) Mandataire: Regimbeau
(86) Numéro de dépôt international: PCT/EP2017/051999
(87) Numéro de publication internationale: WO 2017/134036

(56) Documents cités:
- US-A- 3 584 602
- US-A- 5 297 513
- US-A1- 2013 036 983

## Description

### DOMAINE DE L'INVENTION

L'invention concerne un système de reproduction en masse adapté pour les espèces de poisson appartenant à la famille des cyprinidés, et plus particulièrement des poissons-zèbre de l'espèce *Danio rerio.*

### ARRIERE-PLAN TECHNOLOGIQUE

L'obtention de pontes de poissons de la famille des cyprinidés, et plus particulièrement des poissons-zèbre de l'espèce *Danio rerio,* à haut rendement en œufs nécessite une main d'œuvre importante et des manipulations fréquentes des poissons reproducteurs.

En effet, les animaux doivent constamment être maintenus à une température de 28°C pour assurer une production régulière et importante d'œufs (300 à 500 œufs par femelle chaque semaine pendant six mois). De plus, les animaux doivent être mis en ponte régulièrement et une étape préalable de sélection des couples est nécessaire afin de sélectionner les animaux les plus performants.

Une période transitoire d'entrainement est par ailleurs importante pour les jeunes femelles en début de cycle (jusque 3 séances infructueuses).

Habituellement, pour contrôler la ponte et augmenter les quantités d'œufs obtenus par ponte, les mâles et les femelles sont conservés séparément dans des bacs dédiés et ne sont réunis que la veille du jour souhaité pour la ponte dans des aquariums préparés spécifiquement à cette fin. Puis, une fois la ponte terminée, les poissons sont péchés, séparés par sexe et replacés dans leur bac initial, ce qui est long et fastidieux à réaliser pour les opérateurs.

Ainsi, la seule mise en reproduction d'une trentaine de couples de poissons reproducteurs de la famille des cyprinidés représente une charge journalière d'environ 1h30.

La surface disponible dans une animalerie de recherche est généralement très contrainte. Or, dans le cas de la reproduction des poissons appartenant à la famille des cyprinidés, de nombreux bacs sont nécessaires pour respecter le mode de reproduction de ces poissons.

Il a également été proposé de laisser les poissons dans un même bac afin de réduire les manipulations par des opérateurs. Toutefois, ce système ne permet pas d'obtenir des pics de ponte des animaux à un instant donné, les animaux pondant de manière continue sur la journée et perdant par conséquent en efficacité. Une telle technique n'est donc pas encore optimum dans une animalerie de recherche qui a besoin de pouvoir obtenir une grande quantité d'œufs dans un faible laps de temps et à un instant donné afin d'effectuer des expériences (telles que des injections au stade '1 cellule', qui nécessite l'obtention d'œufs précoces). De plus, les œufs obtenus se mélangent généralement avec les fèces des poissons et doivent donc être séparés avant utilisation.

Le document US 2013/036983 décrit un système de production de grandes quantités d'embryons d'animaux aquatiques, comprenant la une cuve de ponte remplie d'eau conçue pour maintenir les animaux aquatiques mâles et femelles dans différentes configurations. Le système peut comprendre une plateforme de ponte comprenant un élément poreux ou perforé permettant aux embryons, mais non à l'animal aquatique, de passer au travers, et un séparateur comprenant un élément poreux ou perforé pouvant être utilisé pour séparer les animaux aquatiques mâles des animaux aquatiques femelles durant une phase de sensibilisation.

Le document US 3 584 602 décrit un système de reproduction comprenant un réservoir principal supportant de manière amovible une cuve confinant des poissons reproducteurs séparés par une grille amovible et des ouvertures dans la cuve pour permettre l'introduction d'un écoulement depuis le réservoir principal.

### RESUME DE L'INVENTION

Un objectif de l'invention est donc de proposer un système de reproduction permettant de réduire le temps de manipulation nécessaire aux opérateurs pour assurer une production importante dans un faible laps de temps et à un instant donné d'œufs de poissons appartenant à la famille des cyprinidés, et plus particulièrement des poissons-zèbre de l'espèce *Danio rerio,* sans pour autant nuire à la régularité des pontes ni réduire la quantité d'œufs pouvant être obtenus. De manière secondaire, la solution proposée doit pouvoir être mise en œuvre dans des animaleries de recherche, qui disposent d'un espace limité.

Pour cela, l'invention propose un système de reproduction (1) pour des poissons appartenant à la famille des cyprinidés, et plus particulièrement pour des poissons-zèbre de l'espèce *Danio rerio*, ledit système étant défini dans la revendication 1 et comprenant :
- un bac de reproduction présentant un fond et des parois latérales,
- un support de ponte placé dans le bac de reproduction et comprenant une plateforme formant une zone de ponte placée à distance du fond du bac de reproduction, et
- un système de circulation d'eau configuré pour modifier un niveau d'eau dans le bac de reproduction et inonder au moins partiellement la plateforme du support de ponte.

Certaines caractéristiques préférées mais non limitatives du système de reproduction décrit ci-dessus sont les suivantes, prises individuellement ou en combinaison :
- le système de reproduction comprend en outre un bac de récolte en communication avec la plateforme, ledit bac de récolte étant configuré pour récolter des œufs pondus par des poissons sur la plateforme,
- le bac de récolte comprend une crépine configurée pour récolter des œufs pondus par des poissons sur la plateforme,
- le système de reproduction comprend plusieurs bacs de reproduction en communication avec un unique bac de récolte, ledit unique bac de récolte étant en communication avec la plateforme de chaque bac de reproduction et configuré pour récolter des œufs pondus par des poissons sur lesdites plateformes,
- le système de reproduction comprend un bac de reproduction compartimenté, chaque compartiment comprenant une plateforme en communication avec le bac de récolte, ledit bac de récolte étant configuré pour récolter des œufs pondus par des poissons sur chacune des plateformes,
- le système de circulation d'eau comprend des canalisations et une pompe et est configuré pour faire circuler de l'eau entre le bac de reproduction et le bac de récolte de manière à modifier un niveau d'eau dans le bac de reproduction,
- la plateforme comprend une grille configurée pour empêcher des poissons de pénétrer dans la partie conique du support de ponte tout en permettant à des œufs d'entrer dans l'entonnoir,
- la paroi conique de l'entonnoir présente des perforations traversantes, formées à une distance prédéterminée de la plateforme formant une zone de ponte, par exemple à une distance comprise entre 1 cm et 5 cm,
- la plateforme est inclinable, et/ou
- un rapport entre la surface de la plateforme et une surface du fond du bac de reproduction est compris entre 0,3 et 0,5.

### BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :

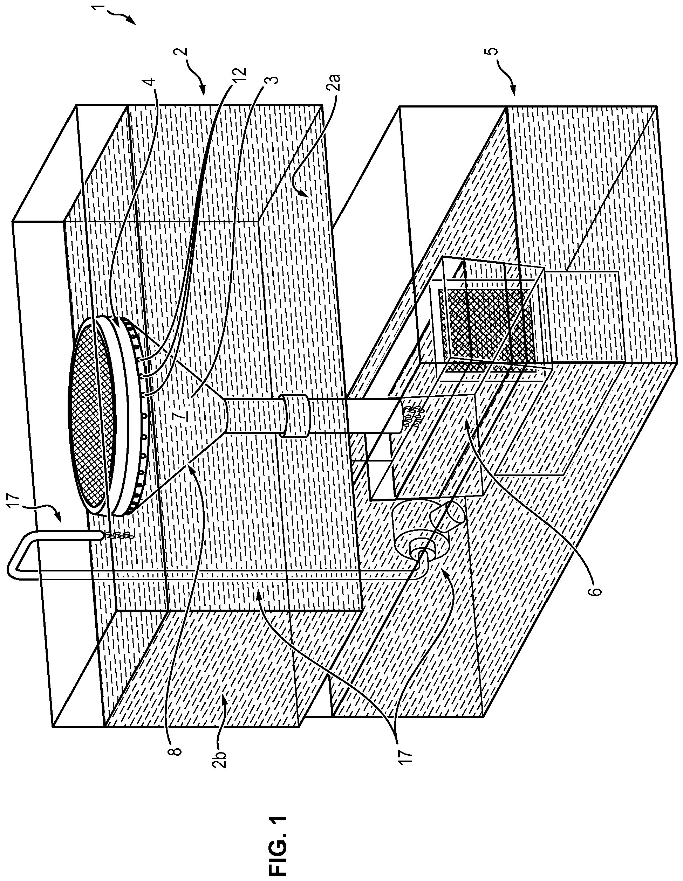

La figure 1 est une vue en perspective d'un exemple de réalisation d'un système de reproduction conforme à l'invention, au cours d'une étape de mise en reproduction de poissons.

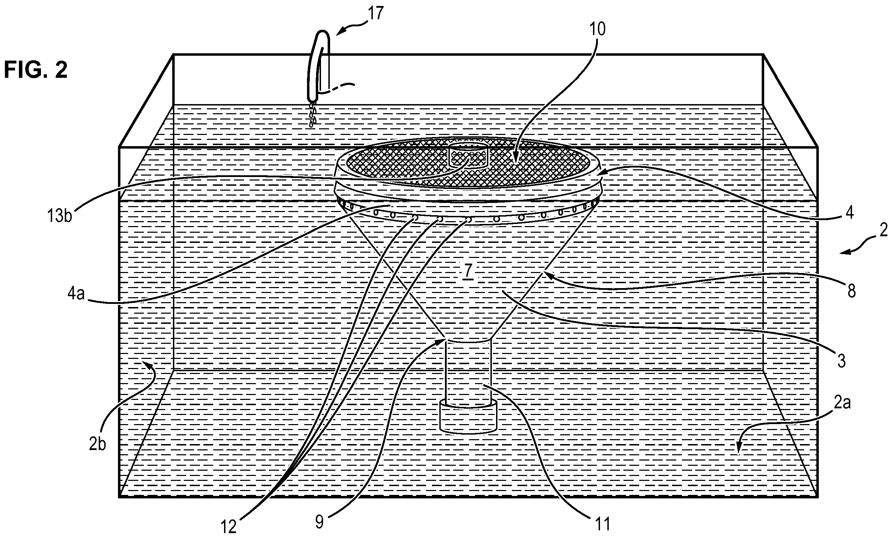

La figure 2 est une vue de côté du support de ponte de l'exemple de la figure 1, la plateforme étant inondée pour la reproduction de poissons.
La figure 3 est une vue de côté du support de ponte de l'exemple de la figure 1, la plateforme étant inondée et inclinée pour la reproduction de poissons.
La figure 4 est une vue de côté d'un exemple de réalisation d'un organe d'obturation pouvant être utilisé dans un système de reproduction conforme à l'invention.
La figure 5 est une vue de côté d'un exemple de réalisation d'un bac de récolte pouvant être utilisé dans un système de reproduction conforme à l'invention.
La figure 6a est une vue en coupe d'un exemple de réalisation d'un support de ponte comprenant un entonnoir conforme à l'invention, avant inondation de la plateforme.
La figure 6b est une vue en coupe du support de ponte de la figure 6a bouché au moins partiellement par un exemple de réalisation d'un organe d'obturation amovible afin d'inonder la plateforme.

### DESCRIPTION DETAILLEE D'UN MODE DE REALISATION

Un système de reproduction 1 pour des poissons appartenant à la famille des cyprinidés, et plus particulièrement pour des poissons-zèbre de l'espèce *Danio rerio,* va à présent être décrit en référence aux figures annexées.

Un tel système de reproduction 1 comprend :
- un bac de reproduction 2 présentant un fond 2a et des parois latérales 2b,
- un support de ponte 3 placé dans le bac de reproduction 2 et comprenant une plateforme 4 formant une zone de ponte placée à distance du fond 2a du bac de reproduction 2, et
- un système de circulation 17 d'eau configuré pour modifier un niveau d'eau dans le bac de reproduction 2 et inonder au moins partiellement la plateforme 4 du support de ponte 3.

Dans la nature, les poissons appartenant à la famille des cyprinidés, et plus particulièrement les poissons-zèbre de l'espèce *Danio rerio*, se reproduisent pendant la saison des pluies. Ils sont en effet stimulés par la montée des eaux qui inondent les berges dans une faible hauteur d'eau. Il s'agit d'une réaction comportementale de ces animaux.

Le système de reproduction 1 permet donc de reproduire ce phénomène dans un bac de reproduction 2 en maintenant les mâles et les femelles ensemble et en agissant sur le niveau d'eau grâce au système de recirculation d'eau et au support de ponte 3 afin d'obtenir des pontes à la demande. De la sorte, le système de reproduction 1 permet de diminuer la maintenance et notamment les manipulations d'animaux, le travail se réduisant à modifier le niveau d'eau pour permettre ou interdire l'accès à la plateforme 4 et ainsi autoriser ou arrêter la ponte. Les poissons sont stimulés principalement par l'accès à la plateforme 4, qui constitue une zone de ponte et sa faible hauteur d'eau qui simule une berge inondée. L'effet de groupe chez ces poissons grégaires a un effet stimulant sur l'ensemble des animaux du lot.

Le système de reproduction 1 permet en outre une meilleure exploitation de l'espace disponible par rapport aux systèmes classiques de reproduction individuelle. En maintenant une production d'œufs équivalente à ces systèmes classiques, elle fournit de meilleures conditions de maintien des animaux et une réduction des manipulations des reproducteurs ainsi que du temps de travail consacré à cette activité, la simple modification du niveau d'eau dans le bac de reproduction 2 permettant d'obtenir la ponte des poissons.

Dans une forme de réalisation, le bac de reproduction 2 est plus grand que les bacs habituellement utilisés pour la reproduction de ces poissons, ce qui empêche les poissons de se chasser ou d'essayer de se reproduire lorsque l'obtention d'œufs n'est pas souhaitée. Le sexage et la sélection des poissons reproducteurs n'est en outre plus nécessaire, grâce à la taille plus importante du bac.

Par exemple, le bac de reproduction 2 peut présenter une longueur de 510 mm pour une largeur de 385 cm et une hauteur de 320 mm, soit un volume d'environ 60 L. Le volume disponible pour les poissons est déterminant pour atteindre une densité de population d'environ cinq adultes par litre dans le bac de reproduction 2. On comprendra bien entendu qu'un bac de reproduction 2 de plus grand volume peut bien entendu également être utilisé.

Les parois latérales 2b du bac de reproduction 2 sont de préférence transparentes afin de permettre à un opérateur de surveiller les poissons et la ponte.

Dans une forme de réalisation, le système comprend en outre un bac de récolte 5 configuré pour récolter des œufs pondus par des poissons sur la plateforme 4. Ce bac de récolte 5 est donc en communication avec la plateforme 4 formant la zone de ponte, afin de permettre la récolte des œufs.

Pour un bac de reproduction 2 de 60L, le bac de récolte 5 peut par exemple présenter une longueur de 550 mm pour une largeur de 300 mm et une hauteur de 345 mm. On comprendra bien entendu qu'un bac de récolte 5 de plus grand volume peut bien entendu également être utilisé.

Un support de récolte 15 des œufs peut être placé dans le bac de récolte 5. Le support de récolte 15 peut par exemple comprendre une crépine présentant un maillage adapté, typiquement de 400 micromètres. Cette crépine 15 peut être placée au fond 5a du bac de récolte 5, ou en variante sur un support de manière à s'étendre à distance dudit fond 5a, par exemple perpendiculairement audit fond 5a.

Optionnellement, le support de récolte 15 peut être placé sur un socle posé au fond 5a du bac de récolte 5 afin de surélever le support de récolte et/ou le maintenir perpendiculaire au fond 5a.

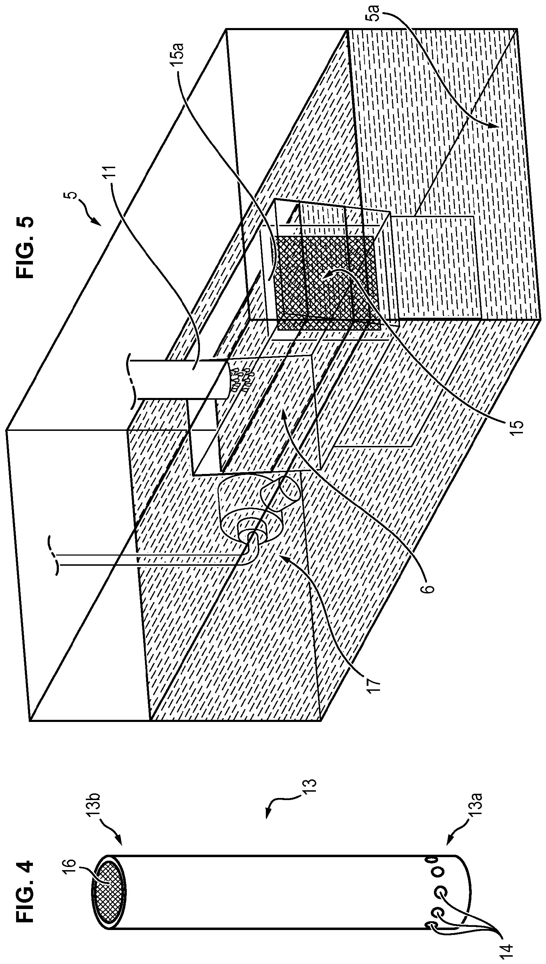

De manière optionnelle également, le support de récolte 15, et le cas échéant le socle, peuvent être fixé sur une boîte 6 telle qu'une boîte de maintenance pour les poissons capable de laisser passer l'eau sans déborder afin d'éviter d'emmener les œufs dans le bac de récolte 5.La boîte 6 est elle-même placée dans le bac de récolte 5, le cas échéant sous la sortie du tuyau 11 du support de ponte 3. Dans l'exemple illustré sur la Figure 5, une crépine 15 est par exemple fixée sur un support plan 15a, qui est inséré dans un logement formé dans la boîte.

Dans ce qui suit, l'invention va plus particulièrement être décrite dans le cas où le système de reproduction 1 comprend un bac de récolte 5 en communication avec la plateforme 4. Ceci n'est cependant pas limitatif, le bac de récolte 5 étant optionnel.

Le bac de reproduction 2 peut être posé sur le bac de récolte 5 afin de réduire l'encombrement du système de reproduction 1. Typiquement, le fond 2a du bac de reproduction 2 peut être posé sur la tranche des parois du bac de récolte 5. En variante, le bac de récolte 5 et le bac de reproduction 2 peuvent être empilés et monoblocs. Dans ce cas, le système de reproduction 1 comprend un unique bac, dont le fond forme le fond 5a du bac de récolte 5 et les parois latérales forment les parois latérales 2b du bac de reproduction 2 et du bac de récolte 5. Cet unique bac comprend en outre une paroi intermédiaire, s'étendant à distance du fond du bac unique, ladite paroi intermédiaire formant le fond 2a du bac de reproduction 2.

Par ailleurs, un même bac de récolte 5 peut être utilisé pour plusieurs bacs de reproduction 2 afin de réduire encore leur encombrement ainsi que le matériel nécessaire pour la reproduction. Le bac de récolte 5 peut alors être de dimensions plus importantes et servir à la fois et simultanément pour la filtration, le pompage et la récolte des œufs pour plusieurs bacs de reproduction 2 en parallèle. De manière optionnelle, les bacs de reproductions peuvent alors être réunis en une seule unité d'eau afin de permettre la mise en reproduction éventuelle de plusieurs lots d'animaux. Le cas échéant, le bac de reproduction 2 peut également être de dimensions plus importantes et être compartimenté de manière à créer des compartiments équivalents à un unique bac de reproduction 2, chaque compartiment comprenant une plateforme 4 afin de permettre la mise en reproduction éventuelle de plusieurs lots d'animaux en parallèle.

Le support de ponte 3 est configuré pour permettre de récupérer les œufs pondus par les poissons sur la plateforme 4 formant une zone de ponte et les transférer dans le bac de récolte 5. A cet effet, le support de ponte 3 comprend un entonnoir 7 en communication fluidique avec le bac de récolte 5, sur lequel est fixée la plateforme 4 formant la zone de ponte.

Dans une forme de réalisation, l'entonnoir 7 comporte une paroi conique 8 tronquée présentant un orifice inférieur 9, un orifice supérieur 10 et un tuyau 11. L'orifice inférieur 9 est plus petit que l'orifice supérieur 10 et s'étend à proximité du fond 2a. Le tuyau 11 est par ailleurs fixé au niveau d'une première extrémité sur l'orifice inférieur 9 de l'entonnoir 7 et au niveau d'une deuxième extrémité dans le fond 2a du bac de reproduction 2. Le tuyau 11 traverse le fond 2a du bac de reproduction 2 de manière à mettre en communication fluidique l'entonnoir 7 avec le bac de récolte 5.

Par exemple, dans le cas où le bac de reproduction 2 est posé sur le bac de récolte 5, le tuyau 11 peut tout simplement déboucher dans le bac de récolte 5.

Dans un exemple de réalisation, la paroi conique 8 présente une hauteur de 150 mm, un diamètre au niveau de l'orifice supérieur 10 de 300 mm et un diamètre au niveau de l'orifice inférieur 9 de 33 mm. Cet exemple de réalisation peut notamment être mis en œuvre dans un bac de reproduction d'environ 60 L.

Le tuyau 11 quant à lui peut présenter un diamètre constant égal au diamètre de l'orifice inférieur 9. En variante, afin de bloquer un organe d'obturation 13 (voir ci-après), le tuyau 11 peut présenter un diamètre, au niveau du fond 2a, plus petit que le diamètre de l'orifice inférieur 9. Par exemple, dans l'exemple de réalisation décrit ci-dessus où le diamètre du tuyau 11 au niveau de l'orifice inférieur 9 est égal à 33 mm, le diamètre du tuyau 11 au niveau du fond 2a peut être égal à 22 mm.

La plateforme 4 est configurée pour former une zone de ponte à faible niveau d'eau afin de simuler une berge pour les poissons après une montée des eaux. C'est pourquoi la plateforme 4 est placée à distance du fond 2a du bac de reproduction 2 : ainsi, la plateforme 4 peut être hors d'atteinte pour les poissons lorsque les opérateurs ne souhaitent pas obtenir d'œufs ce qui évite qu'elle ne soit souillée (notamment par les fèces des poissons) avant la ponte, puis être inondée de manière à être au moins partiellement immergée grâce au système de circulation 17 d'eau afin de simuler la montée des eaux. Lors de l'inondation, l'inclinaison de la plateforme 4 fait dépasser jusqu'à 10 à 20% de la zone de la surface créant une pente douce sous la surface disponible pour les animaux.

On notera que le système de circulation 17 d'eau peut être en fonctionnement continu afin de permettre la filtration et la circulation de l'eau dans le bac de reproduction 2, qui est nécessaire pour les animaux.

La plateforme 4 permet en outre de récolter les œufs sans avoir à manipuler les poissons, tout en évitant que les œufs ne soient mélangés aux fèces des poissons.

Pour cela, la plateforme 4 comprend une grille dimensionnée de manière à permettre uniquement aux œufs de poisson d'entrer dans l'entonnoir 7. En d'autres termes, le maillage de la grille est choisi plus grand que la taille des œufs des poissons afin de laisser les œufs passer, mais plus petit que la taille des poissons afin de les empêcher d'entrer dans l'entonnoir 7. La grille permet ainsi de récupérer les œufs pondus par les poissons de manière simple et efficace, sans risquer de perturber les poissons ce qui permet d'augmenter leur bienêtre et, par voie de conséquence, la quantité d'œufs pondus.

Le maillage de la grille peut par exemple présenter des mailles de 1 millimètre à 5 millimètres, par exemple de l'ordre de 4 millimètres.

La plateforme 4 est placée dans une zone adjacente à l'orifice supérieur 10 de manière à s'étendre à distance du fond 2a du bac de reproduction 2. Par exemple, la plateforme 4 peut être posée et fixée sur l'entonnoir 7 de manière à recouvrir son orifice supérieur 10. Dans ce cas, la grille de la plateforme 4 peut par exemple être fixée sur un joint 4a, typiquement en plastique ou en silicone, qui est emmanché sur l'orifice supérieur 10 de l'entonnoir 7.

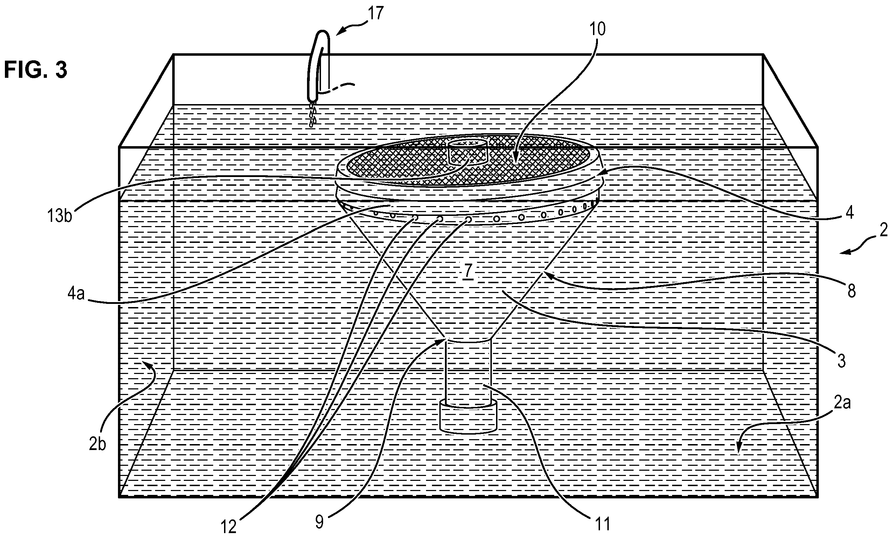

De manière optionnelle, la plateforme 4 peut être inclinable afin de mieux simuler une berge pour les poissons. Par exemple, la plateforme peut être inclinée grâce au joint 4a, qui maintient ladite plateforme 4 en position inclinée sur la tranche de l'orifice supérieur 10 comme illustré sur la figure 3.

Un rapport entre la surface de la plateforme 4 formant la zone de ponte et la surface du fond 2a du bac de reproduction 2 est compris entre 0,3 et 0,5.

Des perforations 12 traversantes peuvent être formées dans la paroi conique 8 de l'entonnoir 7, à proximité de la plateforme 4. Comme nous le verrons par la suite, ces perforations 12 permettent de fixer passivement, c'est-à-dire sans action d'un opérateur, le niveau d'eau dans le bac de reproduction 2 lorsque la reproduction et la ponte des poissons n'est pas souhaitée. Les perforations 12 peuvent par exemple être formées dans la paroi conique 8 à une distance comprise entre 1 cm et 5 cm de la plateforme 4. Le diamètre des perforations permet le passage de l'eau mais évite le passage des poissons adultes en reproduction, actuellement 3 ou 4 mm.

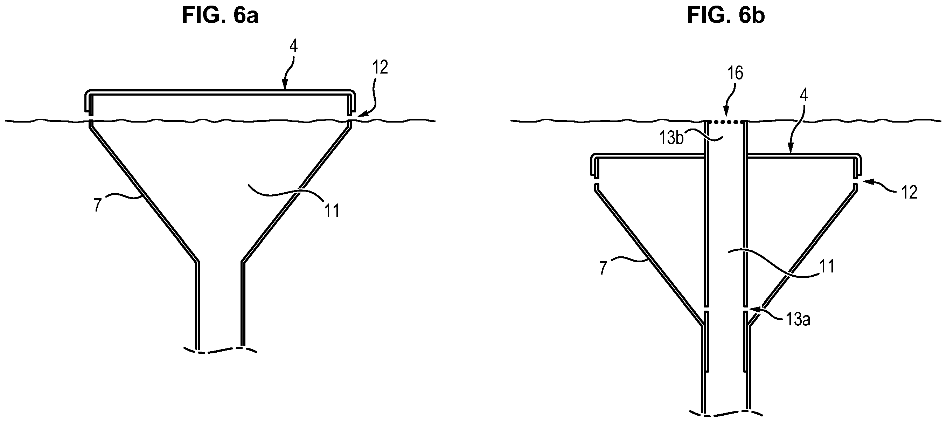

Le système de reproduction 1 comprend en outre un organe d'obturation 13 amovible configuré pour boucher au moins partiellement le tuyau 11 du support de ponte 3 afin de permettre d'augmenter le niveau d'eau dans le bac de reproduction 2 (voir figure 6b). A cet effet, l'organe d'obturation 13 comprend un tuyau creux 13 présentant une première extrémité 13a, configurée pour être insérée dans le tuyau 11 du support de ponte 3, et une deuxième extrémité 13b configurée pour faire saillie de l'orifice supérieur 10 du support de ponte 3. La longueur du tuyau creux 13 est donc choisie de sorte que, lorsque le tuyau creux 13 est introduit dans le support de ponte 3, sa deuxième extrémité 13b s'étend au-dessus de la plateforme 4. Comme nous le verrons par la suite, la longueur du tuyau creux 13 et, par conséquent, la hauteur de sa deuxième extrémité 13b par rapport à celle de la plateforme 4, détermine la hauteur d'eau dans le bac de reproduction 2 lorsque la plateforme 4 est inondée.

Dans l'exemple de réalisation décrit ci-dessus, dans lequel l'orifice inférieur 9 présente un diamètre de 33 mm, le tuyau creux 13 peut par exemple présenter un diamètre de 32 mm. La longueur du tuyau creux 13 peut par ailleurs être d'environ 220 mm, lorsque la hauteur du bac de reproduction 2 est de 320 mm pour un volume de 60 L.

Des trous traversants 14 sont en outre formés à proximité de la première extrémité 13a du tuyau creux 13. La position des trous 14 est choisie de sorte que, lorsque le tuyau creux 13 est introduit dans le support de ponte 3, lesdits trous 14 s'étendent à proximité de l'orifice inférieur 9 de l'entonnoir 7 afin d'aspirer l'eau (et les œufs) dans une zone inférieure de l'entonnoir 7 tout en restant au-dessus du tuyau 11 du support de ponte 3 afin que ce dernier n'obture pas les trous 14.

L'introduction du tuyau creux 13 dans le tuyau 11 du support de ponte 3 permet de boucher le tuyau 11 du support de ponte 3 et donc de ne permettre l'évacuation de l'eau (et des œufs) vers le bac de récolte 5 tout d'abord uniquement par les trous 14 formés dans le tuyau creux 13, puis ensuite aussi par l'orifice de l'extrémité 13b qui détermine le niveau d'eau d'immersion (voir figure 6b).

La taille et le nombre de trous 14 sont choisis de manière à permettre le passage des œufs pondus par les poissons tout en limitant suffisamment le débit d'eau afin de faire monter le niveau d'eau dans le bac de reproduction 2 au-dessus de la plateforme 4. Par exemple, le tuyau creux 13 peut comprendre entre deux et six trous ayant chacun un diamètre compris entre 3.5 mm et 6 mm, par exemple de l'ordre de 4 mm (à 10% près), typiquement quatre trous équidistants de 4 mm chacun.

Afin de permettre l'introduction du tuyau creux 13 dans le support de ponte 3, la plateforme 4 comprend un passage dont les dimensions sont ajustées au diamètre externe du tuyau creux 13. Le cas échéant, un joint peut être fixé sur les contours du passage afin d'éviter que des poissons ne puissent entrer dans l'entonnoir 7 le long du tuyau creux 13.

Le passage est de préférence formé dans le prolongement du tuyau 11 du support de ponte 3 afin de faciliter l'insertion du tuyau creux 13.

Le système de circulation 17 d'eau peut comprendre des canalisations 17, connectant le bac de récolte 5 et le bac de reproduction 2, et une pompe configurée pour aspirer de l'eau dans le bac de récolte 5 et amener, via les canalisations, l'eau dans le bac de reproduction 2.

Le cas échéant, le système de circulation 17 peut en outre comprendre une filtration mécanique et biologique à base de divers substrats adaptés, par exemple de la pouzzolane, positionnés en amont de la pompe.

L'utilisation du système de reproduction 1 en vue de d'obtenir des œufs à la demande va à présent être décrite.

Au cours d'une première étape, le support de ponte 3 est fixé dans le bac de reproduction 2. A cet effet, l'entonnoir 7 est fixé, via son tuyau 11, dans le fond 2a du bac de reproduction 2 de sorte que le tuyau 11 débouche dans le bac de récolte 5 situé en-dessous.

Le système de circulation 17 d'eau est en outre mis en place. Par exemple, des canalisations peuvent être placées de manière à déboucher d'une part dans le bac de récolte 5 et d'autre part dans le bac de reproduction 2. Par ailleurs, une pompe peut être fixée au niveau de l'une des canalisations afin de permettre la circulation d'eau entre le bac de récolte 5 et le bac de reproduction 2 via les canalisations.

Enfin, une crépine 15 est placée dans le bac de récolte 5, optionnellement sur un support et/ou dans une boîte 6.

Le bac de récolte 5 et le bac de reproduction 2 sont ensuite remplis d'eau. Le système de circulation d'eau 17 est mis en route. Grâce aux perforations 12 formées dans la paroi conique 8 de l'entonnoir 7, le niveau d'eau dans le bac de reproduction 2 arrive en dessous de la plateforme 4. Les poissons n'ont donc pas accès à la plateforme 4 tant que les opérateurs n'ont pas décidé de déclencher la ponte. Le niveau d'eau est en outre stable, le volume d'eau dépassant les perforations 12 étant évacué au fur et à mesure via les perforations 12.

La circulation d'eau entre le bac de reproduction 2 et le bac de récolte 5 peut être continue afin de fournir un apport continu en oxygène aux poissons, de dégazer le dioxyde de carbone et de permettre le bon fonctionnement de la filtration.

Au cours d'une deuxième étape, une fois que la stabilité biologique du milieu est atteinte, des poissons mâles et femelles sont placés dans le bac de reproduction 2.

Le système de reproduction 1 est alors prêt à être utilisé afin de provoquer la ponte des poissons femelles (figure 6a).

On notera que, le rapport entre la surface de la plateforme 4 (grille) formant la zone de ponte et la surface du fond 2a du bac de reproduction 2 étant compris entre 0,3 et 0,5, il est possible de laisser les poissons mâles et les poissons femelles ensemble dans le bac de reproduction 2 en dehors des moments de ponte. Les étapes de sexage, de séparation et de regroupement préalables des poissons ne sont donc plus nécessaires avec ce système de reproduction 1.

Lorsqu'une ponte est souhaitée, au cours d'une troisième étape, le niveau d'eau dans le bac de reproduction 2 est monté de manière à inonder la plateforme 4. Le cas échéant, la plateforme 4 peut être inclinée pour simuler une berge.

A cet effet, le tuyau creux 13 peut par exemple être introduit dans l'entonnoir 7 via le passage formé dans la plateforme 4 afin de boucher le tuyau 11 du support de ponte 3. Le niveau d'eau monte alors jusqu'à atteindre sa deuxième extrémité (figure 6b). Lorsque le niveau d'eau atteint cette deuxième extrémité, qui se trouve au-dessus de la plateforme 4 afin de permettre son inondation, le surplus d'eau est alors évacué vers le bac de récolte 5, l'eau atteignant la deuxième extrémité 13b du tuyau creux, qui est en communication fluidique avec l'intérieur du tuyau 11. C'est donc bien la longueur du tuyau creux 13 et la hauteur de sa deuxième extrémité par rapport à la plateforme 4 qui détermine le niveau d'eau dans le bac de reproduction 2, lorsque celui-ci y est introduit.

Le cas échéant, une crépine 16 présentant un maillage dont les dimensions sont analogues à celles de la grille peut être fixée sur la deuxième extrémité 13b du tuyau creux 13 afin d'éviter que des poissons ne soient évacués avec le surplus d'eau dans le bac de récolte 5. La crépine 16 peut par exemple comprendre un filet de maille de 3mm.

Grâce au système de circulation 17 d'eau, il est ainsi possible de créer une zone de ponte à faible hauteur d'eau pour les poissons sans avoir à introduire un nouvel objet visible par les poissons dans le bac de reproduction 2. Seul le tuyau creux 13 est en effet introduit dans le bac de reproduction 2 : or celui-ci n'est pas visible par les poissons puisqu'il est placé dans l'entonnoir 7.

Typiquement, si le support de ponte 3 avait été introduit ou bougé dans le bac de reproduction 2 afin d'inonder la plateforme 4 au moment où la ponte est souhaitée, les poissons auraient été perturbés par ces mouvements et la ponte aurait nécessairement été moins efficace.

La faible hauteur d'eau sur la plateforme 4 et la simulation de la saison des pluies résultant de la hausse du niveau d'eau dans le bac de reproduction 2 ont pour effet de stimuler les poissons pour se reproduire. Les femelles pondent ainsi des œufs sur la plateforme 4 qu'elles identifient à une berge. Ces œufs passent directement à travers la plateforme 4 et tombent dans l'entonnoir 7, puis sont dirigés vers le fond de l'entonnoir 7 puis vers le bac de récolte 5, grâce aux trous 14 formés au niveau de la première extrémité du tuyau 11 d'obturation qui permettent une évacuation à faible débit de l'eau et des œufs. Les œufs n'ont donc pas le temps de coller aux parois de l'entonnoir 7.

Les œufs s'accumulent en revanche sur la crépine 15 du bac de récolte.

Au cours d'une quatrième étape, lorsque les poissons ont suffisamment pondu d'œufs, la crépine 15 peut être retirée du bac de récolte 5 afin de collecter les œufs et le tuyau creux 13 peut être retiré, libérant ainsi le tuyau 11 du support de ponte 3. Le volume d'eau dépassant les perforations 12 formées dans l'entonnoir 7 est alors évacué dans le bac de récolte 5, notamment via les perforations 12 formées dans la paroi conique 8.

Les poissons peuvent ensuite être laissés dans le bac de reproduction 2 jusqu'à la prochaine ponte.

## Revendications

1. Système de reproduction (1) pour des poissons appartenant à la famille des cyprinidés, et plus particulièrement pour des poissons-zèbre de l'espèce *Danio rerio,* ledit système comprenant :
- un bac de reproduction (2) présentant un fond (2a) et des parois latérales (2b),
- un support de ponte (3) placé dans le bac de reproduction (2) et comprenant une plateforme (4) formant une zone de ponte placée à distance du fond (2a) du bac de reproduction (2), et
- un système de circulation (17) d'eau configuré pour modifier un niveau d'eau dans le bac de reproduction (2) et inonder au moins partiellement la plateforme (4) du support de ponte (3), ledit système étant **caractérisé en ce que** le support de ponte (3) comprend un entonnoir (7) comportant une paroi conique (8) tronquée présentant un orifice inférieur (9), s'étendant à proximité du fond (2a) du bac de reproduction (2) et en communication fluidique avec le système de circulation (17) d'eau par l'intermédiaire d'un tuyau (11), et un orifice supérieur (10) s'étendant à distance du fond (2a), la plateforme (4) étant fixée à proximité de l'orifice supérieur (10) de l'entonnoir (7), et le système de reproduction (1) comprend en outre un organe d'obturation (13) amovible configuré pour boucher au moins partiellement le tuyau (11) du support de ponte (3) afin d'augmenter un niveau d'eau dans le bac de reproduction (2) pour inonder au moins partiellement la plateforme (4), l'organe d'obturation (13) comprenant un tuyau à l'extrémité (13a) duquel sont formés des trous traversants (14), ledit tuyau présentant une hauteur plus grande qu'une distance entre l'orifice inférieur (9) et l'orifice supérieur (10).

2. Système de reproduction (1) selon la revendication 1, comprenant en outre un bac de récolte (5) en communication avec la plateforme (4), ledit bac de récolte (5) étant configuré pour récolter des œufs pondus par des poissons sur la plateforme (4).

3. Système de reproduction (1) selon la revendication 2, dans lequel le bac de récolte (5) comprend une crépine (15) configurée pour récolter des œufs pondus par des poissons sur la plateforme (4).

4. Système de reproduction (1) selon l'une des revendications 2 ou 3, ledit système (1) comprenant plusieurs bacs de reproduction (2) en communication avec un unique bac de récolte (5), ledit unique bac de récolte (5) étant en communication avec la plateforme (4) de chaque bac de reproduction (2) et configuré pour récolter des œufs pondus par des poissons sur lesdites plateformes (4).

5. Système de reproduction (1) selon l'une des revendications 2 à 4, ledit système (1) comprenant un bac de reproduction (2) compartimenté, chaque compartiment comprenant une plateforme (4) en communication avec le bac de récolte (5), ledit bac de récolte (5) étant configuré pour récolter des œufs pondus par des poissons sur chacune des plateformes (4).

6. Système de reproduction (1) selon l'une des revendications 2 à 5, dans lequel le système de circulation (17) d'eau comprend des canalisations et une pompe et est configuré pour faire circuler de l'eau entre le bac de reproduction (2) et le bac de récolte (5) de manière à modifier un niveau d'eau dans le bac de reproduction (2).

7. Système de reproduction (1) selon la revendication 6, dans lequel la plateforme (4) comprend une grille configurée pour empêcher des poissons de pénétrer dans la partie conique du support de ponte (3) tout en permettant à des œufs d'entrer dans l'entonnoir (7).

8. Système de reproduction (1) selon l'une des revendications 6 ou 7, dans lequel la paroi conique (8) de l'entonnoir (7) présente des perforations (12) traversantes, formées à une distance prédéterminée de la plateforme (4) formant une zone de ponte, par exemple à une distance comprise entre 1 cm et 5 cm.

9. Système de reproduction (1) selon l'une des revendications 1 à 8, dans lequel la plateforme (4) est inclinable.

10. Système de reproduction (1) selon l'une des revendications 1 à 9, dans lequel un rapport entre la surface de la plateforme (4) et une surface du fond (2a) du bac de reproduction (2) est compris entre 0,3 et 0,5.

## Patentansprüche

1. System für die Zucht (1) von Fischen, die zur Familie der Cyprinidae gehören, und insbesondere von Zebrafischen der Spezies *Danio rerio,* wobei das System umfasst:
- ein Zuchtbecken (2), aufweisend einen Boden (2a) und Seitenwände (2b),
- einen im Zuchtbecken (2) platzierten Gelegehalter (3) und umfassend eine Plattform (4), die eine Gelegezone bildet, die vom Boden (2a) des Zuchtbeckens (2) beabstandet platziert ist, und
- ein Wasserzirkulationssystem (17), das konfiguriert ist, um einen Wasserstand im Zuchtbecken (2) zu verändern und die Plattform (4) des Gelegehalters (3) mindestens teilweise zu überschwemmen,
wobei das System **dadurch gekennzeichnet ist, dass**
der Gelegehalter (3) einen Trichter (7) umfasst, aufweisend eine verkürzte konische Wand (8), die eine untere Öffnung (9) aufweist, die sich in der Nähe des Bodens (2a) des Zuchtbeckens (2) und in Fluidkommunikation mit dem Wasserzirkulationssystem (17) mittels eines Rohrs (11) erstreckt, und eine obere Öffnung (10), die sich beabstandet vom Boden (2a) erstreckt, wobei die Plattform (4) in der Nähe der oberen Öffnung (10) des Trichters (7) befestigt ist, und das Zuchtsystem (1) ferner ein lösbares Verschlussorgan (13) umfasst, das konfiguriert ist, um das Rohr (11) des Gelegehalters (3) mindestens teilweise zu verschließen, um einen Wasserstand in dem Zuchtbecken (2) zu erhöhen, um die Plattform (4) mindestens teilweise zu überschwemmen, wobei das Verschlussorgan (13) ein Rohr umfasst, an dessen Ende (13a) Durchgangslöcher (14) ausgebildet sind, wobei das Rohr eine größere Höhe als ein Abstand zwischen der unteren Öffnung (9) und der oberen Öffnung (10) aufweist.

2. Zuchtsystem (1) nach Anspruch 1, umfassend ferner einen Erntebehälter (5) in Kommunikation mit der Plattform (4), wobei der Erntebehälter (5) konfiguriert ist, um von den Fischen auf der Plattform (4) abgelaichte Eier zu ernten.

3. Zuchtsystem (1) nach Anspruch 2, wobei der Erntebehälter (5) ein Filternetz (15) umfasst, das konfiguriert ist, um von Fischen auf der Plattform (4) abgelaichte Eier zu ernten.

4. Zuchtsystem (1) nach einem der Ansprüche 2 oder 3, wobei das System (1) mehrere Zuchtbecken (2) in Kommunikation mit einem einzigen Erntebehälter (5) umfasst, wobei der einzige Erntebehälter (5) mit der Plattform (4) jedes Zuchtbeckens (2) in Kommunikation und konfiguriert ist, um von Fischen auf den Plattformen (4) abgelaichte Eier zu ernten.

5. Zuchtsystem (1) nach einem der Ansprüche 2 bis 4, wobei das System (1) ein in Abteile unterteiltes Zuchtbecken (2) umfasst, wobei jedes Abteil eine Plattform (4) in Kommunikation mit dem Erntebehälter (5) umfasst, wobei der Erntebehälter (5) konfiguriert ist, um von Fischen auf jeder der Plattformen (4) abgelaichte Eier zu ernten.

6. Zuchtsystem (1) nach einem der Ansprüche 2 bis 5, wobei das Wasserzirkulationssystem (17) Kanalisationen und eine Pumpe umfasst und konfiguriert ist, um Wasser zwischen dem Zuchtbecken (2) und dem Erntebehälter (5) derart in Zirkulation zu versetzen, dass ein Wasserstand im Zuchtbecken (2) verändert wird.

7. Zuchtsystem (1) nach Anspruch 6, wobei die Plattform (4) ein Gitter umfasst, das konfiguriert ist, um zu verhindern, dass Fische in den konischen Teil des Gelegehalters (3) eindringen, wobei es Eiern gestattet ist, in den Trichter (7) zu gelangen.

8. Zuchtsystem (1) nach einem der Ansprüche 6 oder 7, wobei die konische Wand (8) des Trichters (7) durchgängige Perforationen (12) aufweist, die in einem vorher festgelegten Abstand von der Plattform (4), die eine Gelegezone bildet, gebildet sind, beispielsweise in einem Abstand, der zwischen 1 cm und 5 cm liegt.

9. Zuchtsystem (1) nach einem der Ansprüche 1 bis 8, wobei die Plattform (4) neigbar ist.

10. Zuchtsystem (1) nach einem der Ansprüche 1 bis 9, wobei ein Verhältnis zwischen der Oberfläche der Plattform (4) und einer Oberfläche des Bodens (2a) des Zuchtbeckens (2) zwischen 0,3 und 0,5 liegt.

## Claims

1. A breeding system (1) for fish belonging to the family of cyprinids, and more particularly for zebrafish of the species *Danio rerio,* said system comprising:
- a breeding tank (2) having a bottom (2a) and side walls (2b),
- a laying support (3) placed in the breeding tank (2) and comprising a platform (4) forming a laying area placed at a distance from the bottom (2a) of the breeding tank (2), and
- a water circulation system (17) configured to modify a level of water in the breeding tank (2) and at least partially flood the platform (4) of the laying support (3),
said system being **characterized in that**
the laying support (3) comprises a funnel (7) including a truncated conical wall (8) having a lower orifice (9), extending in the vicinity of the bottom (2a) of the breeding tank (2) and in fluid communication with the water circulation system (17) through a pipe (11), and an upper orifice (10) extending at a distance from the bottom (2a), the platform (4) being fixed in the vicinity of the upper orifice (10) of the funnel (7), and the breeding system (1) further comprises a removable closure member (13) configured to at least partially plug the pipe (11) of the laying support (3) in order to increase a level of water in the breeding tank (2) to at least partially flood the platform (4), the closure member (13) comprising a pipe at the end (13a) of which through holes (14) are formed, said pipe having a height greater than a distance between the lower orifice (9) and the upper orifice (10).

2. The breeding system (1) according to claim 1, further comprising a collection tank (5) in communication with the platform (4), said collection tank (5) being configured to collect eggs laid by fish on the platform (4).

3. The breeding system (1) according to claim 2, wherein the collection tank (5) comprises a strainer (15) configured to collect eggs laid by fish on the platform (4).

4. The breeding system (1) according to any of claims 2 or 3, said system (1) comprising several breeding tanks (2) in communication with a single collection tank (5), said single collection tank (5) being in communication with the platform (4) of each breeding tank (2) and configured to collect eggs laid by fish on said platforms (4).

5. The breeding system (1) according to any of claims 2 to 4, said system (1) comprising a compartmentalized breeding tank (2), each compartment comprising a platform (4) in communication with the collection tank (5), said collection tank (5) being configured to collect eggs laid by fish on each of the platforms (4).

6. The breeding system (1) according to any of claims 2 to 5, wherein the water circulation system (17) comprises pipelines and a pump and is configured to circulate water between the breeding tank (2) and the collection tank (5) so as to modify a level of water in the breeding tank (2).

7. The breeding system (1) according to claim 6, wherein the platform (4) comprises a fish screen configured to prevent fish from penetrating the conical portion of the laying support (3) while allowing eggs to enter the funnel (7).

8. The breeding system (1) according to any of claims 6 or 7, wherein the conical wall (8) of the funnel (7) has through perforations (12), formed at a predetermined distance from the platform (4) forming a laying area, for example at a distance comprised between 1 cm and 5 cm.

9. The breeding system (1) according to any of claims 1 to 8, wherein the platform (4) is tiltable.

10. The breeding system (1) according to any of claims 1 to 9, wherein a ratio between the surface of the platform (4) and a surface of the bottom (2a) of the breeding tank (2) is comprised between 0.3 and 0.5.
